# EUROPEAN PATENT APPLICATION

(11) **EP 4 524 900 A1**
(43) Date of publication of application: **19.03.2025**
(21) Application number: 23197344.7
(22) Date of filing: 14.09.2023
(51) Int. Cl.: G06T 19/20

(54) **METHOD AND SYSTEM FOR IMPROVED INTERACTION WITH MEDICAL 2D AND 3D VISUALIZATION**

(71) Applicant: Koninklijke Philips N.V., 5656 AG Eindhoven (NL)
(72) Inventor: FRISON, Sebastian Walter, Eindhoven (NL); GEURTS, Lucas Jacobus Franciscus, Eindhoven (NL); PLUYTER, Jon Ragna, 5656AG Eindhoven (NL)
(74) Representative: Philips Intellectual Property & Standards

(57) **Abstract**

Some embodiments are directed to a 3D visualization of medical image data. An overlay may be generated from a specific 2D image slice of a plurality of 2D image slices and segmented anatomical entities therein. The segmented anatomical entities are interactable for selecting or deselecting in the overlay. A 3D visualization is displayed wherein the selected one or more anatomical entities are visually distinguished.

## Description

### FIELD OF THE INVENTION

The presently disclosed subject matter relates to a computer-implemented method for medical 3D visualization of medical image data, to a system and to a computer-readable medium.

### BACKGROUND OF THE INVENTION

Medical visualization in oncology plays an important role in modern medicine, using various types of scans like computed tomography (CT) scans or magnetic resonance imaging (MRI). Surgeons and other medical professionals are trained to understand these scans to accurately identify tumors and determine the most effective strategies for patient treatment.

3D visualization of these scans further assists surgeons to formulate surgical plans, particularly in complex cancer cases where conventional scans are difficult to read. For instance, in a complex pancreatic cancer where the tumor grows into a vein, the extent is difficult to assess on the scan. Through 3D visualization, surgeons gain an immediate overview of the patient's specific anatomy, enabling them to identify crucial landmarks and potential anomalies, thereby minimizing the risk of injury during the operation.

Medical 3D visualization remains an area where improvement is possible.

### SUMMARY OF THE INVENTION

A method for medical 3D visualization of medical image data is provided. The medical imaging data comprises a plurality of 2D image slices, such as might be obtained from a scan of a volume of a patient's body by a medical imaging apparatus. In the method, an overlay for a specific 2D image slice of the plurality of 2D image slices is displayed in which segmented anatomical entities are interactable for selecting or deselecting in the overlay.

In addition to the overlay, a 3D visualization is also shown of the same anatomical entities. The 3D visualization is generated from the plurality of 2D image slices and visually distinguishes the anatomical entities that are selected at least through the interactable segmented anatomical entities shown in the overlay. In a typical example, the deselected anatomical entities are not shown, while the selected anatomical entities are. Other options are possible though, e.g., a change in opacity, e.g., of the deselected anatomical entities.

The method is advantageous as it allows a user, e.g., a medical practitioner, to study the overlay and/or the 2D image slice to which it relates, and select anatomical entities therein as needed, without having to divert attention to a different interface. Especially when analyzing medical 2D images, such as X-rays or similar scans, maintaining continuous focus is important. Shifting one's attention can lead to disruptions in the cognitive flow, potentially causing missed or inaccurate observations. By providing a streamlined interface, this method ensures that the practitioner remains immersed in the evaluation.

Known systems that generate 3D visualizations of medical images, have not established itself in the medical field. Indeed, medical practitioners mostly stick with 2D medical images. This may be contributed to the complexity of the existing systems, in combination with scepsis by medical practitioners. Often, new technologies involving 3D visualizations are complex to learn, and typically come with special input and interaction systems and interfaces. Embodiments further address this problem by building on an interface medical practitioners are already familiar with: they can operate and deal with a 2D viewer in a customary way, and through this also interact with the 3D viewer, as anatomical entities are interactable.

The method may be implemented in an electronic device or system, e.g., a computer or a non-transitory computer-readable medium.

A person skilled in the art will appreciate that the method may be applied to multidimensional image data acquired by various acquisition modalities such as, but not limited to, standard X-ray Imaging, Computed Tomography (CT), Magnetic Resonance Imaging (MRI), Ultrasound (US), Positron Emission Tomography (PET), Single Photon Emission Computed Tomography (SPECT), and Nuclear Medicine (NM), or any combination of these devices.

An embodiment of the method may be implemented on a computer as a computer implemented method, or in dedicated hardware, or in a combination of both. Executable code for an embodiment of the method may be stored on a computer program product. Examples of computer program products include memory devices, optical storage devices, integrated circuits, servers, online software, etc. Preferably, the computer program product comprises non-transitory program code stored on a computer readable medium for performing an embodiment of the method when said program product is executed on a computer.

In an embodiment, the computer program comprises computer program code adapted to perform all or part of the steps of an embodiment of the method when the computer program is run on a computer. Preferably, the computer program is embodied on a computer readable medium.

Another aspect of the presently disclosed subject matter is a method of making the computer program available for downloading. This aspect is used when the computer program is uploaded, and when the computer program is available for downloading. By downloading software according to an embodiment, an computer may be transformed into a device according to an embodiment.

### BRIEF DESCRIPTION OF DRAWINGS

Further details, aspects, and embodiments will be described, by way of example only, with reference to the drawings. Elements in the figures are illustrated for simplicity and clarity and have not necessarily been drawn to scale. In the figures, elements which correspond to elements already described may have the same reference numerals. In the drawings,
Fig. 1 schematically shows an example of an embodiment of a system for medical 3D visualization of medical image data,
Fig. 2 schematically shows an example of an embodiment of a system for medical 3D visualization of medical image data,
Fig. 3 schematically shows an example of an embodiment of a system for medical 3D visualization of medical image data involving pre-computations of 3D objects,
Fig. 4 schematically shows an example of an embodiment of an arrangement for medical 3D visualization of medical image data,
Fig. 5 schematically shows an example of an embodiment of a 3D visualization of medical image data,
Fig. 6 schematically shows an example of an embodiment of a 3D visualization, an overlay, and receiving a selection,
Fig. 7 schematically shows an example of an embodiment of a 3D visualization, and an overlay,
Fig. 8 schematically shows an example of an embodiment of a system for 3D visualization,
Fig. 9 schematically shows an example of an embodiment of a method for medical 3D visualization of medical image data,
Fig. 10a schematically shows a computer readable medium having a writable part comprising a computer program according to an embodiment,
Fig. 10b schematically shows a representation of a processor system according to an embodiment.

### DESCRIPTION OF EMBODIMENTS

While the presently disclosed subject matter is susceptible of embodiment in many different forms, there are shown in the drawings and will herein be described in detail one or more specific embodiments, with the understanding that the present disclosure is to be considered as exemplary of the principles of the presently disclosed subject matter and not intended to limit it to the specific embodiments shown and described.

In the following, for the sake of understanding, elements of embodiments are described in operation. However, it will be apparent that the respective elements are arranged to perform the functions being described as performed by them.

Further, the subject matter that is presently disclosed is not limited to the embodiments only, but also includes every other combination of features described herein or recited in mutually different dependent claims.

In the context of oncological medical imaging, surgeons can profit greatly by visualizing 3D versions of conventional scans. Medical practitioners need to be able to gain an overview, as well as to inspect details of anatomical structures, such as anomalous arterial branching or tumor ingrowth. Yet, having full control of the navigation in the 3D space can lead to users losing their orientation, and struggling with wayfinding.

Surgeons and most medical doctors in oncology work under high time pressure, and learning how to navigate and interact with a 3D environment with an unknown input system requires time and effort that surgeons rarely have. For example, in a particular workflow a surgeon may have to base his/her decisions on the 2D medical images, so that using a 3D environment would necessitate going back and forth between these two different input systems and ways of working.

Existing versions of 3D medical visualization systems are disconnected from their 2D counterparts. In the context of assessing complex cases of pancreatic tumors, for example, surgeons tend to concentrate on conventional scans and often not use and examine 3D visualization, despite its potential benefits for them.

Some embodiments are directed to a 3D visualization of medical image data. An overlay may be generated from a specific 2D image slice of a plurality of 2D image slices and segmented anatomical entities therein. The segmented anatomical entities are interactable for selecting or deselecting in the overlay. A 3D visualization is displayed wherein the selected one or more anatomical entities are visually distinguished.

Embodiments allow medical practitioners to use 3D navigation by augmenting an interface for 2D images, that they are already familiar with, e.g., a conventional DICOM viewer. This augmentation makes relevant elements on a scan interactable. For example, surgeons can operate the 2D viewer as they normally would, but they can also choose to interact with it by selecting elements such as organs and vessels to navigate the corresponding 3D visualization. This selection triggers a dynamic 3D view of the scan. For example, the surgeons can control an orbiting camera around the selected elements in 3D, e.g., with keyboard input. A keyboard input may be used in combination with a pointer input; for example, a mouse modifier such as holding the CTRL key while interacting with the mouse.

Furthermore, embodiments had the advantage that selections for 3D visualization could be made without losing eye contact with the 2D image that is currently under study.

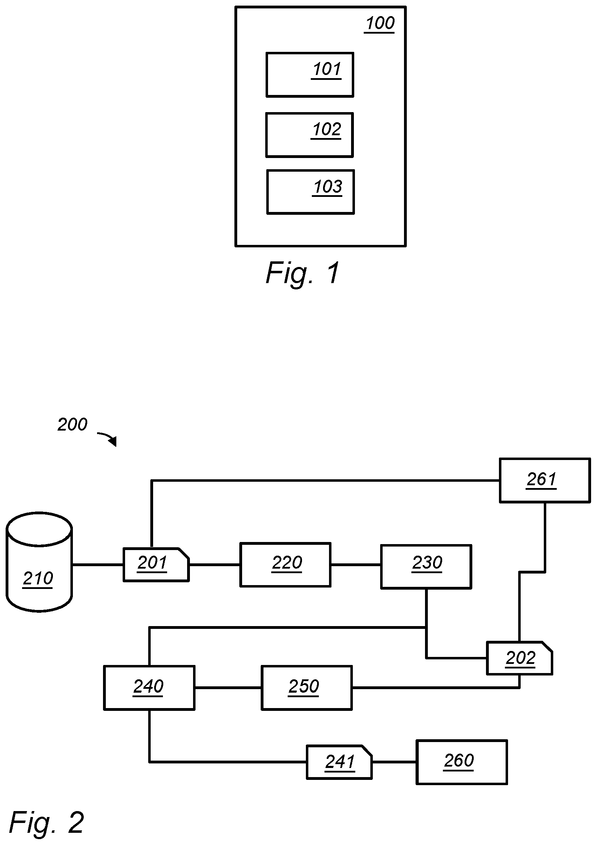

Fig. 1 schematically shows an example of an embodiment of a system for medical 3D visualization of medical image data 100. System 100 may comprise a medical device, such as a medical workstation. For example, the system 100 may be used for medical 3D visualization of conventional medical scans, such as CT scans.

System 100 may be configured to generate a 3D visualization from a plurality of 2D image slices. For example, a medical practitioner may use the system to analyze medical images, e.g., to diagnose a patient, or to plan a medical procedure. Generating 3D visualizations may create useful insights for the medical practitioner, as it may approximate the internal complex anatomical structures inside the patient closely. The analysis of the 3D visualizations may then help the medical practitioner to detect anomalies in the anatomical structures, such as tumors or anomalous arterial branching, formulate a corresponding diagnosis in a better way, and/or establish a decision on what kind of medical procedure to choose, as well as a planning on how to give form to the procedure, when to plan it exactly, and tailor it for the patient in a personal manner, such that it contributes towards a correct medical treatment for the patient.

Even if the tumor is detected in the medical 2D images, 3D segmentation is useful for visualizing uncertainty regions, giving insight in the potential tumor size, e.g., max tumor size, and damaged surrounding vessels.

Certainly in difficult situations such as complex cases of pancreatic, wherein a tumor may grow into a vein, the intertwined structure of the tumor and the vein may be hard to distinguish on the conventional 2D scans, where the medical practitioner sees everything projected without depth as from above, and has to use their imagination to create a 3D representation in their head, whilst a 3D visualization may be helpful in assessing this case. Furthermore, anatomical variations between individuals may be of influence on the surgical plan, yet such differences are hard to understand from 2D images.

System 100 may comprise a processor system 101, a storage 102, and a communication interface 103. Storage 102 may be, e.g., electronic storage, magnetic storage, etc. The storage may comprise local storage, e.g., a local hard drive or electronic memory. Storage 102 may comprise non-local storage, e.g., cloud storage. In the latter case, storage 102 may comprise a storage interface to the non-local storage. Storage may comprise multiple discrete sub-storages together making up storage 102. Storage may comprise a volatile writable part, say a RAM, a non-volatile writable part, e.g., Flash, a non-volatile non-writable part, e.g., ROM.

In the various embodiments of communication interfaces 103, the communication interfaces may be selected from various alternatives. For example, the interface may be a network interface to a local or wide area network, e.g., the Internet, a storage interface to an internal or external data storage, an application interface (API), etc.

Storage 102 may be non-transitory storage. For example, storage 102 may store data in the presence of power such as a volatile memory device, e.g., a Random Access Memory (RAM). For example, storage 102 may store data in the presence of power as well as outside the presence of power such as a non-volatile memory device, e.g., Flash memory.

The system 100 may communicate internally, with other systems, with other devices, external storage, input devices, output devices, and/or one or more sensors over a computer network. The computer network may be an internet, an intranet, a LAN, a WLAN, etc. The computer network may be the Internet. The system 100 may comprise a connection interface which is arranged to communicate within system 100 or outside of system 100 as needed. For example, the connection interface may comprise a connector, e.g., a wired connector, e.g., an Ethernet connector, an optical connector, etc., or a wireless connector, e.g., an antenna, e.g., a Wi-Fi, 4G or 5G antenna.

The communication interface 103 may be used to receive digital data, e.g., medical imaging data, such as data comprising CT, MRI PET, SPECT or ultrasound images. Communication interface 103 may be used to send a display signal to cause a display to display a 3D visualization generated by system 101. The display displaying the 3D visualization may be a holographic display and/or an augmented-reality headset, by which the 3D visualization may be thought of as a hologram. The display displaying the 3D visualization may be VR, possibly with a mixed reality mode to see the medical workstation, or with a virtual medical workstation in VR.

The 3D visualization comprises a 3D representation of anatomical entities, which is generated from a plurality of 2D image slices. One may think of this 3D representation as a stacked or concatenated stack of such or similar 2D image slices in the third dimension. Types of the resulting 3D visualization in a 3D display as a stored image may be of a TIFF (Tag Image File Format) format file, which is a generic format to store a hologram-type visualization. The representation in a 3D scene of a 3D model comprising 3D structures, may include providing each structure with a surface texture; lighting is added to make the 3D scene visible using computer graphics techniques.

System 100 may have a user interface, which may include well-known elements such as a display, a touch screen, etc. The user interface may be arranged for accommodating user interaction for performing selections of anatomical entities as interactable elements on a displayed overlay. This user interaction may take place on a touch screen, using a touch screen stylus and/or a finger, or via an external pointer device, such as a mouse, a cursor device, or a pointer. The user interaction may comprise a selection of anatomical entities to be visually distinguished, or to be shown exclusively. It may also comprise a deselection of anatomical entities, to be visually distinguished, or to be hidden from the resulting 3D visualization completely.

The execution of system 100 may be implemented in a processor system. The system 100 may comprise functional units to implement aspects of embodiments. The functional units may be part of the processor system. For example, functional units shown herein may be wholly or partially implemented in computer instructions that are stored in a storage of the system and executable by the processor system.

The processor system may comprise one or more processor circuits, e.g., microprocessors, CPUs, GPUs, etc. System 100 may comprise multiple processors. A processor circuit may be implemented in a distributed fashion, e.g., as multiple sub-processor circuits. For example, system 100 may use cloud computing.

Typically, the system 100 comprises a microprocessor which executes appropriate software stored at the system; for example, that software may have been downloaded and/or stored in a corresponding memory, e.g., a volatile memory such as RAM or a non-volatile memory such as Flash.

Instead of using software to implement a function, system 100 may, in whole or in part, be implemented in programmable logic, e.g., as field-programmable gate array (FPGA). The system may be implemented, in whole or in part, as a so-called application-specific integrated circuit (ASIC), e.g., an integrated circuit (IC) customized for their particular use. For example, the circuits may be implemented in CMOS, e.g., using a hardware description language such as Verilog, VHDL, etc. In particular, system 100 may comprise circuits, e.g., for graphic processing, and/or arithmetic processing.

In hybrid embodiments, functional units are implemented partially in hardware, e.g., as coprocessors, and partially in software stored and executed in the system.

Fig. 2 schematically shows an example of an embodiment of a system 200 for medical 3D visualization of medical image data. For example, system 200 may be implemented on a system such as illustrated with reference to Fig. 1. For example, system 200 may be implemented on a computer.

In an embodiment, a 2D display is used for viewing 2D image slices, and another display is used for viewing 3D visualizations. For example, the latter may use a holographic display, or the like. For example, an embodiment may be used to navigate 3D visualizations stemming from a 3D imaging scan. The navigation is useful, e.g., to assess and prepare surgery for complex cancer cases but may also be used in other cases to help medical practitioners, e.g., surgeons, understand specific anatomy and identify critical or anomalous landmarks.

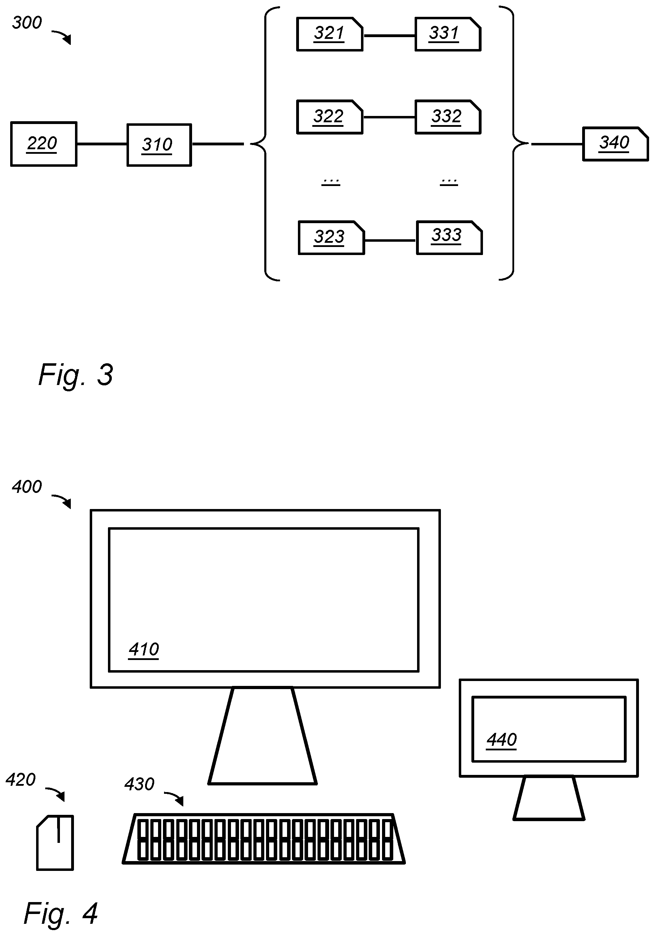

In an embodiment, a conventional DICOM viewer may be provided with a software extension enabling navigation of 3D medical data according to an embodiment. For example, said extension may be configured to connect the DICOM viewer with an external display, e.g., a holographic display. Further possibilities are discussed herein, e.g., with reference to Fig. 4.

System 200 is configured to retrieve medical imaging data 201 from a medical imaging data repository 210. Medical imaging data 201 comprises a plurality of 2D image slices. For example, the plurality of 2D image slices may comprise one or more of: CT images, MRI images, PET images, SPECT images, ultrasound images. The medical imaging apparatus generates a consecutive series of 2D image slices representing an anatomical volume, such as a patient's brain or heart. For instance, this could be the detailed imagery of a human patient's liver or a tumor within the lung.

System 200 may comprise a segmentation model 220. Segmentation model 220 may be implemented as software stored in the system 200. A segmentation model 220 may also be accessed online, e.g., stored on an external server, e.g., as a cloud service. Segmentation model 220 is configured to segment anatomical entities in the plurality of 2D image slices.

Segmentation model 220 may use a segmentation algorithm to detect anatomical elements such as organs, tissues, vessels, and tumors on medical imaging data 201, e.g., a CT scan. For example, segmentation model 220 may comprise a U-Net neural networks. U-Net, being a convolutional neural network architecture, has shown good results in medical image segmentation tasks. This means the segmentation model 220 may effectively delineate intricate structures and offer detailed insights into the anatomy present in the CT scan.

In addition or instead of a U-Net, segmentation model 220 may use other algorithms and/or neural network architectures.

Segmentation of medical 2D images can also be achieved using techniques like Active Contour Models which adaptively adjust curves on an image to identify and isolate desired structures. Additionally, Random Forests, a machine learning algorithm, may be employed in segmenting complex medical images. Another relevant technology in the domain of medical imaging is image registration, wherein an image is mapped to a template. Specifically, this process may comprise aligning and transforming different sets of images so that they spatially correspond to a template or reference image.

After segmenting the 2D images in the plurality of 2D images in medical imaging data 201, a 3D model may be constructed of organs and/or other anatomical structures therein, e.g. in 3D visualizer 240, or in a dedicated 3D structure unit. As each 2D image slice represents a thin section of an anatomical volume in a body, when combined in sequence, they collectively describe a 3D volume.

For example, in this 3D volume, each pixel from the 2D image may transition into a voxel. The voxels may be labelled with a segmentation label and/or tissue type, which may be obtained from the 2D segmentations, such as bone, organ tissue, air, specific organs, vessels, and so on. Various surface rendering techniques may be used to convert the segmented voxels into a 3D object, e.g., a mesh of polygons, typically triangles. For example, the Marching Cubes algorithm may be used to generate a surface representation from the voxel data. For example, the polygonising algorithms of Paul Bourke may be used, described, e.g., on https://paulbourke.net/geometry/polygonise/, included herein by reference. Further processing may be performed, e.g., including smoothing out imperfections.

Alternatively, a 3D segmentation may be obtained directly from the plurality of 2D image slices. For example, a neural network, such as a U-net, may receive the plurality of 2D image slices and produce a 3D segmentation. From the 3D segmentation, 2D segmentations of specific image slices may be obtained.

System 200 is configured to show the image slices to a user of system 200 on a display 261. Display 261 may be a 2D display. For example, system 200 may be configured to select a specific image from the plurality of 2D image slices. For example, system 200 may be configured to receive a selection from the user for a specific image from the plurality of 2D image slices, and display it. A user may change the selection of the specific image for displaying by interacting with system 200, e.g., through a keyboard or the like. For example, displaying a specific 2D image may use a DICOM viewer.

System 200 may comprise an overlay generator 230 configured to generate an overlay 202 for the specific 2D image slice of the plurality of 2D image slices in medical imaging data 201.

Overlay 202 shows the segmented anatomical entities in the specific 2D image slice. By displaying overlay 202, typically overlayed over the specific 2D image for which overlay 202 was generated, a user may see the various anatomical entities that the segmentation algorithm found. Overlay 202 and the specific image are displayed on display 261.

There are various ways to visually distinguish the segmented anatomical entities in overlay 202; for example, one or more of the following: a color-coding, a texture mapping, an opacity, outline or border style, brightness or contrast, and a highlighting. In particular, visual distinguishing may indicate whether a segment, and the corresponding anatomical entity, is selected or not; and/or whether a segment is hovered on.

In an embodiment, visual distinguishing may be derived from selected and deselected anatomical entities following predetermined rules. For example, when a segment is selected, adjacent segments that are close to the selected segment, but not itself selected may still be displayed in 3D, although perhaps in another style, e.g., semitranslucent. For example, a rule may display an unselected segment based on resectability criteria, e.g., where critical structures, e.g., vessels, have to be examined in relationship to e.g. a tumor that is segmented.

Interestingly, the segmented anatomical entities in overlay 202 are interactable for selecting or deselecting in the overlay 202. System 200 comprises a user interface 250 for interacting with the segmented anatomical entities in overlay 202 that are visually distinguished in overlay 202. User interface 250 is configured to receive a selection for one or more anatomical entities in overlay 202 displayed on display 261 from a user interaction with the displayed segmented anatomical entities. For example, system 200, e.g., user interface 250 may receive a user input signal within the displayed overlay 202 from a pointing device, such as a mouse, a cursor, or a pointer, such as a click or hovering on a segmented anatomical entity shown in overlay 202.

Note that some pointer devices do not support hovering on a segment. A mouse for example, does support hovering, and so does eye tracking. On the other hand, a touch screen supports selecting, e.g., clicking, but typically not hovering.

The 2D viewer may then receive an event, e.g., from an operating system, comprising a mouse event, e.g., a mouse down event, and coordinates of the event. An implemented program which may be integrated in system 200 may then determine that the coordinates are in an interactable region, in particular in a segment of overlay 202.

For example, system 200, e.g., an image viewer may receive an event, e.g., from an operating system of system 200. The event may comprise a pointer event, e.g., a mouse event. The pointer event may comprise a click or hover event, and coordinates of the event. For example, this may be a mouse down event. The program may determine that the coordinates are in an interactable region, in particular a segment, in overlay 202.

Detecting mouse clicks or hover actions on a segment within an image slice may be implemented using an event listener to the image or the display area showing overlay 202. The event listener would listen for events in the image, e.g., a mouse action like a 'click' or a 'hover'. Once an event is detected, the X and Y coordinates of the event may be captured, e.g., of a mouse pointer at the moment the event took place. With the captured coordinates, system 200 may check if the point lies within one of the segments in the image. For example, the coordinates may be compared against a mask representation of the segment.

In an embodiment, the user interaction for receiving the selection comprises receiving a user eye-tracking signal within the displayed overlay 202 obtained from a camera. For example, a user looking at a segment may be detected. This may be regarded as a hover signal. For example, a user may in addition signal a click event, e.g., by pressing a key on a device. The user eye-tracking signal may be obtained from an external camera, or from an internal camera which may be embedded in the 2D display.

An advantage of system 200 is that the interaction is located at the same place as where overlay 202, and typically, the specific image is visible. This means that a user can study the segmentation shown in overlay 202, and or the medical image data in the specific image, and select or deselect segments in overlay 202, without switching focus from overlay 202 to another user interface. This is advantageous, as analyzing medical images involves carefully following the representation of the anatomy in the image, where removing one's glance even for a short while to switch to another input interface would risk losing the chain of analysis that the user was engaged in. By having interactable segments in the same location as the where the segments and/or the image are studies this is avoided, a user can select or deselect a segment while continuing looking at overlay 202 and/or the specific image to which it applies.

In a sense, the relevant elements, such as organs, tissues, tumors and vessels become interactable. For example, these elements in overlay 202 may react to hovering and may be selectable, e.g., by a mouse click. Instead of a mouse any other pointing interface that allows localized interaction may be used, e.g., a touch screen, stylus, and/or an external pointer device, such as a mouse, a cursor device, or a pointer.

When an anatomical entity is selected or deselected this may be reflected in a 3D visualization as further discussed herein. A distinction may be made between hovering and clicking a segment. For example, a hovering on a segment may be regarded as a temporary selection, lasting for the duration of the hovering on the segment. While a selection event such as a click, may select the segment until later deselection. For example, the two events may also be visually distinguished. For example, a temporary selection by hovering may be shown in a different visual style, e.g., different color, etc.

The selections of segment by a user will impact the 3D visualization. System 200 may generate some pre-selection from the segmented anatomical entities in the plurality of 2D image slices. For example, the pre-selection may be empty, so that the user may add segments to the selection. Alternatively, the initial selection may be full, with all anatomical entities or segmented parts selected. The user may then modify this initial selection by deselecting a segment.

In an embodiment, the pre-selection is a non-empty, and strict subset from the segmented anatomical entities; that is not all segmented anatomical entities are selected and not all are deselected in the pre-selection. For example, the pre-selection may be generated by system 200 to aid a user of system 200 to quickly arrive at a selection best suited to the task at hand, e.g., analyzing the images, e.g., for diagnosis or procedure planning. Pre-selection rules may take into account that if one entity is selected, then by default other segments are also made visible. For example, a tumor could be close to a vein, say the vena porta vein, so if the tumor is selected then the vein, being critical structure, could be shown as well if the tumor is very close to it, e.g., to the vena porta segmentation. On the other hand, of the critical structure is selected, the tumor may be highlighted as well in relationship to this structure, even if the tumor is not selected itself.

Optionally, an anomaly detection algorithm in system 200, may be used to identify unusual regions in segmented medical images. For example, the algorithm may learn the normal characteristics of an image or region therein and flag anything that deviates from the norm beyond a threshold. Such anomaly detection algorithm may be trained with unsupervised learning. The anomaly detection algorithm may also be trained to detect specific anatomical anomalies in the anatomical entities, e.g., including one or more of: lesions, anomalous arterial branches, tumors, bone abnormalities. For example, the pre-selection may include the identified anatomical anomalies. Bone abnormalities may include, for example, bone fractures, bone deformities.

Pre-selection of anatomical entities and/or corresponding segments may use a rule based system, such as an expert system, which uses a predefined set of rules to analyze the data, including e.g., segment labels, and/or detected anomalies. For example, the rule-based system may have rules that flag regions above a certain size, with irregular borders, or with pixel intensities outside a typical range. The rules may be defined by medical experts.

Pre-selection of anatomical entities may also or instead use a machine learning model, trained to label a segment for pre-selection or not. For example, the model may be trained using supervised classification. For example, the model may be trained on a set of 2D images or on multiple medical imaging data, e.g., on a set of pluralities of images, and a corresponding selection that was reached by a user of system 200. In this way, the model would learn what selection a user of system 200 typically arrives at, and learns to select segments in the same way.

System 200 is configured to enable a user to amend the pre-selection thus obtaining the selection used for creating the 3D visualization. Using pre-selection allows users to go from their first look of a new set of images to a useful 3D visualization thereof much quicker.

User interaction with overlay 202 may be reflected in overlay 202 as well as in the 3D visualization. For example, if a user hovers with the mouse over a segment, the hovered segment may be highlighted in overlay 202. The corresponding 3D object in the 3D visualization may be adjusted as well, e.g., the opacity may change, e.g., increase. If a user selects one or more of these segments, e.g., by clicking on them, the segments on overlay 202 may visually signify this; The corresponding 3D elements may be highlighted. The visual representation of a hovered or selected segment may be different in overlay 202 and/or in the 3D visualization. For example, a selected segment may be filled with color on the 2D image slice. These interactions enable a user, such as a surgeon, to inspect landmarks in detail and to gain an overall understanding of the patient-specific anatomy by navigating a 3D environment.

System 200 comprises a 3D visualizer 240 configured to generate a 3D visualization 241 from the plurality of 2D image slices. 3D visualization 241 visually distinguishes the selected one or more anatomical entities.

3D visualization 241 may be displayed on a display 260. Display 260 may be separate from display 261. For example, display 260 may be a separate projection device, such as a holographic display and/or an augmented-reality (AR) headset. Display 260 is preferably capable of 3D projection, e.g., a stereoscopic 3D display, in which a different image is shown to the two eyes of a user.

Display 260 may be a 2D display, but used to show 3D visualization 241. For example, this may use 2.5D or pseudo-3D. For example, depth of 3D visualization 241 may be suggested with techniques such as parallax scrolling, shadowing, and occlusion. In fact, displays 260 and display 261 may be the same display, e.g., using a different region of the display for 2D and 3D visualization.

Preferably, the 2D image viewing, e.g., a DICOM viewer, is synchronized with the 3D visualization viewer in real-time, so that when one or more elements on the 2D image are interacted with, the 3D immediately reacts accordingly.

The selection of anatomical entities may be made through multiple specific images. For example, a first specific 2D image may be displayed to a user. The user may select anatomical entities in the first specific 2D image shown to him/her or may amend the selection. Then a second specific 2D image may be displayed to a user. The user may then select anatomical entities in the second specific 2D image shown to him/her or may amend the selection. This allows selection/deselection of anatomical entities that are not visible in a specific 2D image.

There are various ways for 3D visualizer 240 to visually distinguish the selection of anatomical entities in 3D visualization 241.

For example, 3D visualizer 240 may include a selected anatomical entity and/or excluding a deselected anatomical entity in the 3D visualization 241. In other words, 3D visualization may only show the selected anatomical entities, and no others. In an embodiment, a deselected but hovered over anatomical entity may be included in 3D visualization 241, possibly in a different visual style.

For example, 3D visualizer 240 may include a deselected anatomical entity in 3D visualization 241, but use a different visual style. For example, selected and deselected anatomical entities may differ in one or more of the following: a color-coding, a texture mapping, an opacity, outline or border style, brightness or contrast, saturating and/or desaturating, and a highlighting. Furthermore, a deselected but hovered over anatomical entity may be included with a different visual style.

In an embodiment, a 2D image slice is shown with an overlay, which is then used to control the appearance of a corresponding 3D visualization. Nevertheless, system 200 may be configured to allow amendment to the selection from the displayed 3D visualization as well. For example, a user may select or deselect a 3D object shown in the displayed 3D visualization. The selection of the user may then be correspondingly amended. As a result, overlay 202 may be modified to show that a segment has now been selected or deselected. As a result, 3D visualization 241 may be modified to show that a segment has now been selected or deselected.

The 3D visualization may use a camera position, e.g., including a camera position and/or direction and/or a zoom level with respect to the 3D objects corresponding to the segmentation of the plurality of 2D image slices. The 3D visualization may be adapted by system 200 and/or the user to allow better visibility of the displayed 3D objects. For example, if a new anatomical entity is selected, the camera position for the 3D visualization may be determined to bring the corresponding 3D object organ into the center. The camera position may provide a specific point of view, that a user to inspect a particular 3D object, e.g., the last selected one. For example, the camera position may be chosen to avoid overlapping objects in a region or object of interest.

3D visualization 241 may have navigation controls, such as changing the camera position, zoom level, etc. For example, in a display mode, the camera orbits around the overlapping region, showcasing the involved organs, vessels, and carcinoma with reduced opacity to observe their interactions more clearly. Surgeons can utilize the zoom function to closely observe the relevant points.

For example, system 200 may allow saving of entity selection and/or camera positions by a user. For example, these may be saved during planning, and later recalled, e.g., during preparation or intraoperation.

Fig. 3 schematically shows an example of an embodiment of a system 300 for medical 3D visualization of medical image data involving pre-computations of 3D objects. System 300 may comprise system 200. In this embodiment, from the segmentation model 220 the resulting segmentation is forwarded to a pre-computer 310 of 3D objects for anatomical entities in the plurality of 2D image slices. These 3D objects may be data structures, which are configured to represent objects in three dimensions. Objects may then, e.g., be rendered by voxels representing data values on a regular grid, as is often the practice in the visualization of medical data; other options may comprise polygonal representations on a mesh, in which case the vertex coordinates may also comprise information on the objects, or constructing a 3D object via parametrizing, triangulation and intersecting of 3D cubic splines, as is used in photogrammetry. The pre-computer 310 then pre-computes various 3D objects 321, 322, 323 which correspond to anatomical entities in the plurality of 2D image slices. Specific anatomical entities may be recognized in the plurality of 2D image slices, e.g., by an AI algorithm. Such an algorithm may detect anatomical entities, such as organs, tissues, vessels, and tumors on the CT scan, and/or create a corresponding 3D visualization.

Generating a corresponding 3D visualization may comprise including in the 3D visualization the pre-computed 3D objects corresponding to the selected anatomical entities and/or visually distinguishing said 3D objects. From the various 3D objects 321,322,333, various 3D visualizations 331,332,333 of 3D objects for anatomical entities in the plurality of 2D image slices may then be created, e.g., by 3D visualizer 240. 3D visualizations 331,332,333 are then combined in a single 3D visualization 340.

Separate generation of visual representation of 3D objects followed by later assembly in a single view is efficient. The assembly may take into account occlusion, and possibly shading or other light effect. Nevertheless, precomputation of 3D objects may also be used without separate generation of visual representation of 3D objects. For example, the pre-computed 3D objects that correspond to selected entities may be included to form a 3D model, which is then rendered as a whole. Other options are possible.

The pre-computed 3D objects corresponding to anatomical entities may be stored, e.g., in the medical image repository. This storing may be temporal, e.g., for a short term, such as the entirety of a corresponding session of generating the 3D visualization or for as long as the 2D image slices are displayed, after which the 3D objects may be cleared from the storage. The storing of the pre-computed 3D objects corresponding to anatomical entities may also be non-temporal, in which case they may be stored in a shared storage, e.g., in a cloud storage, and they may be shared, e.g., within a medical imaging department of a hospital, and/or with the entire hospital, for, e.g., research and/or training purposes.

Fig. 4 schematically shows an example of an embodiment of an arrangement 400 for medical 3D visualization of medical image data. A 2D display 410 displays an overlay which is generated from a specific 2D image slice of the plurality of 2D image slices and the segmented anatomical entities therein, wherein the segmented anatomical entities are interactable for selecting or deselecting in the overlay. 2D display 410 may comprise a so-called DICOM (Digital Imaging and Communications in Medicine) viewer. 2D display may also comprise a touch screen. A keyboard 430 may be used for user inputs, such as navigation through the displayed overlay. A pointing device 420, which may be external from keyboard 430, may be used for user input, such as a selection for one or more anatomical entities in the displayed overlay, which selection may be obtained from a user interaction with the displayed segmented anatomical entities by means of pointing device 420. Pointing device 420 may comprise a mouse, a cursor device, an active stylus, a passive stylus, and/or a pointer. 2D display 410 may also comprise a touch screen. 3D display 440 may display the resulting 3D visualization. 3D display 440 may be a holographic display and/or an augmented-reality headset.

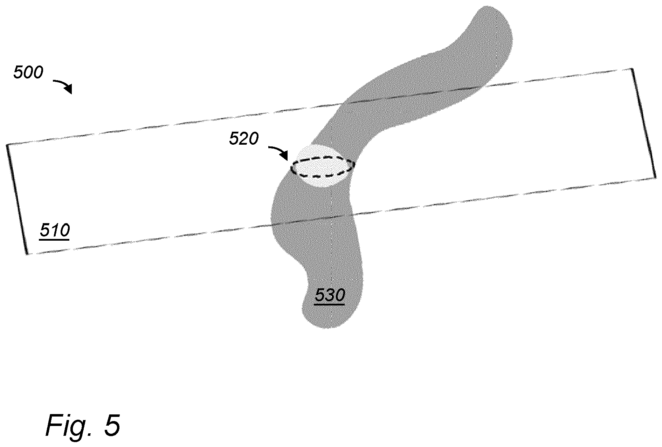

Fig. 5 schematically shows an example of an embodiment of a 3D visualization 500 of medical image data. In this embodiment, the 3D representation 500 of an anatomical entity 530 which may be visualized, may display anatomical structures which may be of interest, such as anomalous arterial branching and/or tumor ingrowth. In the embodiment illustrated in Fig. 5, the position 510 of the specific 2D image slice in the plurality of 2D image slices is made visible and displayed on 3D model 500. Position 510 may be displayed by means of a 2D plane in 3D presentation 500; this plane may be displayed restricted to the intersection of the plane with the displayed anatomical entity 530 in the 3D presentation, which results in segment 520. This may be shown as only the intersection lines, e.g., in a dotted or otherwise hashed way, and/or color-coded. For orientation purposes, the plane may also be displayed outside of the displayed anatomical entity 530 in the 3D presentation 500. It may be displayed as a finite plane, with borders, or as an infinite plane, in which it stretches out to the totality of 3D representation 500.

3D representation 500 may be displayed in a certain orientation on the 3D display. A default orientation may be one such that the anatomical entity of a patient is displayed to the user as if the patient themselves would be positioned were they placed on a surgery table. The position 520 of the segment 520 of the anatomical entity which corresponds to the specific 2D image slice, which is part of position 510 of the specific 2D image slice, may also be visible in 3D representation 500. Position 520 then displays where the segment is exactly located in the anatomical entity.

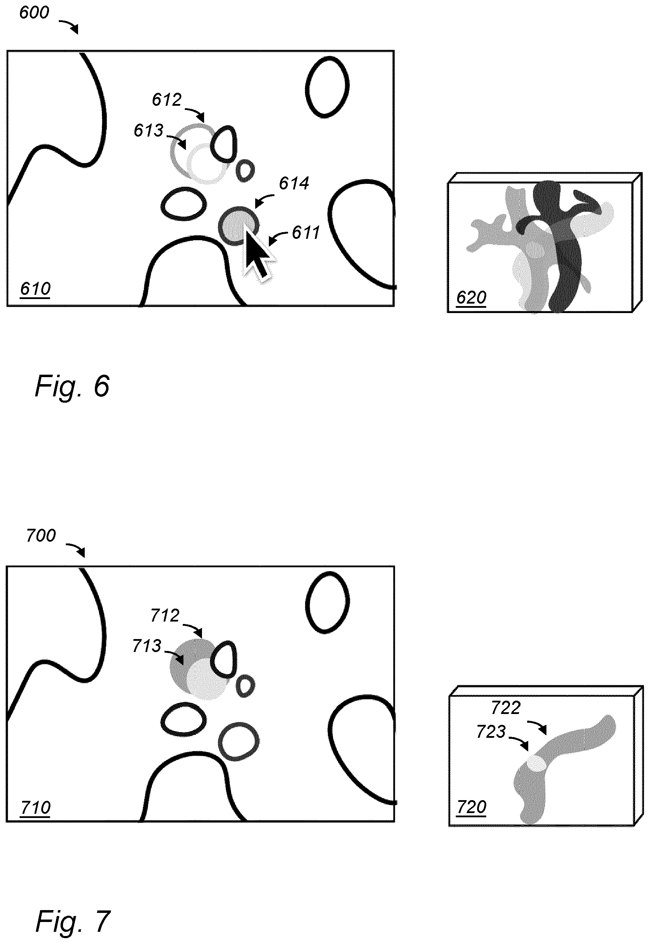

Fig. 6 schematically shows an example of an embodiment of a 3D visualization, an overlay, and receiving a selection. System 600 for medical 3D visualization of medical image data may comprise a 2D display and a 3D display according to an embodiment. System 600 may comprise an overlay 610, which may be displayed on a 2D display. Displayed overlay 610 may be generated from a specific 2D image slices and segmented anatomical entities therein. Overlay 610 may comprise interactable segments 612,613,614, which may correspond to the segmented anatomical entities. Overlay 610 may receive a user interaction. It may receive the user interaction in the form of an input it receives in the interaction with a cursor 611. Cursor 611 may transmit an input it may receive from a pointing device, such as a mouse, a cursor device, an active stylus, a passive stylus, and/or a pointer.

In the user interaction, cursor 611 may select or deselect an interactable segment 612,613,614. The user interaction may then comprise receiving a user input signal. The user input signal may comprise a click and/or a hovering. When an anatomical entity in the displayed overlay 610 is clicked on and/or hovered over, it may, as a response to this user interaction, be visually distinguished via e.g., a change in color and/or a highlighting. The user interaction may then be interpreted as selecting and/or deselecting one or more anatomical entities in the displayed overlay. As a response to the user interaction, via interaction between the 2D model displayed in overlay 610 on the 2D display, e.g., the selected anatomical entities, and/or the 3D model displayed in the displayed 3D visualization 620 on the 3D display, displayed 3D visualization 620 may change in its visual representation accordingly with regards to the selected and/or deselected anatomical entities. The 3D display may then display the resulting 3D visualization 620, wherein the selected and/or deselected one or more anatomical entities may be visually distinguished, e.g., by including only the selected one or more anatomical entities, by excluding deselected anatomical entities, and/or by displaying the selected one or more anatomical entities in a visually distinguished way from the deselected anatomical entities and/or the anatomical entities that have been selected nor deselected.

Visually distinguishing an anatomical entity from another anatomical entity may comprise displaying a distinguishing opacity, color-coding, hatching, texture mapping, outline or border style, brightness or contrast, saturating and/or desaturating and/or highlighting. The selected and/or deselected anatomical entities may be further visually distinguished in overlay 610 by the same means.

In this case, the three interactable segment 611-613, 612 and 613 two are shown with only a border, and no fill, while segment 614 is shown with a border and a fill color. In both cases, the segment may be transparent to show a corresponding 2D image that may be shown underneath.

A user interaction resulting in user input may also comprise the replacing of the specific 2D image slice of the plurality of 2D image slices that is currently displayed together with its overlay 610, with another 2D image slice of the plurality of 2D image slices, in response to user input. A new overlay may be displayed together with the new slice. This allows the user to browse through the 2D slices. This input may also be received from a pointing device, such as a mouse, a cursor device, an active stylus, a passive stylus, and/or a pointer. If the specific 2D image slice is replaced a user, the overlay is changed as well to an overlay corresponding to the new 2D image slice.

System 600 may also receive a pre-selection from the segmented anatomical entities in the plurality of 2D image slices. This pre-selection may be obtained by an algorithm, such as an AI algorithm, and shown by system 600 on display 610. A user interaction may be carried out on this pre-selection. As a response to the user interaction, this pre-selection may be amended by the user, obtaining the eventual selection of selection for one or more anatomical entities as a result. This eventual selection may then be shown in 3D visualization 620.

System 600 may also receive a selection for one or more anatomical entities in the displayed 3D visualization. This selection may be received as user input, or resulting from an algorithm, such as an AI algorithm. System 600 may then display the amended selection in 3D visualization 620 and/or 2D overlay 610.

Fig. 7 schematically shows an example of an embodiment of a 3D visualization, and an overlay. The system 700 for medical 3D visualization of medical image data may comprise an overlay 710, selected segments 712, 713 which correspond to anatomical entities on overlay 710, a displayed 3D visualization 720, and correspondingly selected elements 722,723 in the displayed 3D model in 3D visualization 720.

When user interaction segments 712,713 have been selected by a user, they may be visually distinguished. Correspondingly, elements 722,723 corresponding to the selected segments may be visually distinguished in 3D visualization 720. In 3D visualization 720 the camera position may, as a response to the resulting user input as a selection of one or more segments 712,713, position itself such that the correspondingly selected elements 722,723 are centered and pointed at by the camera in a correct orientation. Also, the selected elements 722,723 may be correctly zoomed in such a way that elements 722,723 fit in the 3D visualization correctly, and/or can be investigated and analyzed by the user in an adequate manner.

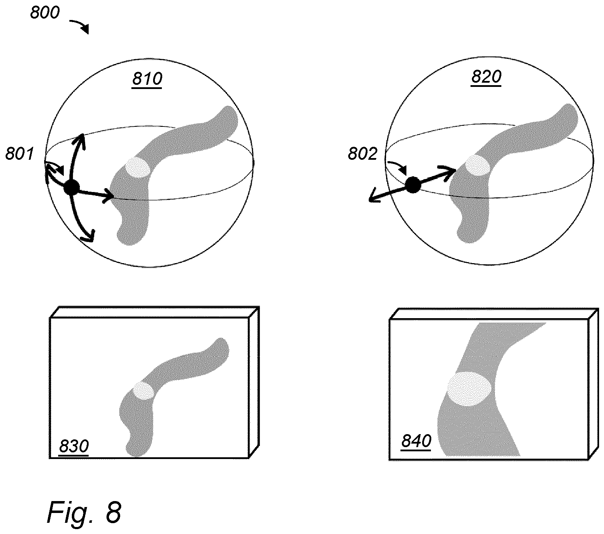

Fig. 8 schematically shows an example of an embodiment of a system for 3D visualization 800. In system 800, generating the 3D visualization 830,840 may comprise defining a 3D camera 801, 802 with respect to selected anatomical entities. The 3D visualization may further comprise selecting a camera position, including a camera location and/or camera direction, for 3D camera 801,802 with respect to a 3D model of one or more anatomical entities. The orientation of the 3D model may be fixed in a default orientation, preferably the default orientation of the 3D model as the anatomical entities which are modelled by the 3D model may be in during a surgical operation.

The position for the 3D visualization, including the location and orientation, of 3D camera 801, 802 may be adjustable in response to a user input, which may allow viewing around the selected anatomical entities. 3D camera 801,802, represented by a black dot in Fig. 8, may then be controlled by a user with user inputs, such as using a user interface, e.g., a touch screen, or via keyboard inputs. Orbit sphere 810, 820 may represent degrees of freedom of 3D camera 801,802 around the 3D model along which 3D camera 801,802 may be controlled in its movements: the location as well as the direction of 3D camera 801,802 may be controlled along orbit sphere 810,820, the orbit sphere 810,820 representing an orbit around the 3D model. With the 3D model being in a fixed orientation, 3D camera 801,802 may smoothly be controlled in its movements towards various positions and directions on orbit sphere 810,820. around the 3D model. In Fig. 8, the 3D model for selected anatomical entities is shown, with orbit sphere 810,820 drawn around it. Note that orbit sphere 810,820 may not usually be shown to the user. The user may then orbit and zoom 3D camera 801,802 around the selected anatomical entities in the 3D model via controlling 3D camera 801,802 using user inputs, resulting in 3D visualizations 830,840 corresponding to controlling 3D camera 801,802.

In system 800, 3D camera 801,802 may also be controlled in its movements in response to an amendment of the selection of anatomical entities obtained from the user interaction to center the selected anatomical entities in 3D. As the user interaction may comprise selecting, e.g., by clicking on a specific segment which corresponds to an anatomical entity, this selection may bring the specific anatomical entity into a specific point of view of 3D camera 801, 802 in the resulting 3D view in 3D visualization 830,840, e.g., via optimizing the orientation such that the specific anatomical entity is more centered in view, and/or optimized by means of zooming in such that the user may inspect it thoroughly.

In an embodiment, 3D visualization 830,840 may comprise the selected anatomical entities shown with reduced opacity, and displaying 3D visualization 830,740 may comprise an animation, e.g., from 3D camera 801,802, orbiting around the selected anatomical entities over orbit sphere 810,820. The animation may be shown in response to a user input. 3D camera may then orbit around the overlapping region of the selected anatomical entities, showing in the animation the specific anatomical entities, such as involved organs, vessels, and carcinoma, with reduced opacity such that the user may observe the interactions between the anatomical entities more thoroughly. In response to a user input, the zoom function of 3D camera 801,802 may be employed to observe the specific anatomical entities more closely.

In an embodiment, in 3D visualization 830,840 there may be switched between different types of models during navigation with the use of 3D camera 801,802 in response to user input: e.g., from a 3D model showing specific anatomical entities according to a selection, there may be switched to a 3D model showing a different selection of anatomical entities.

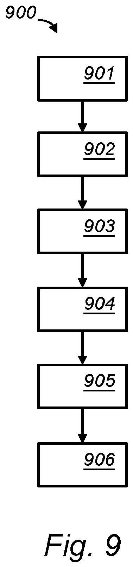

Fig. 9 schematically shows an example of an embodiment of a method for medical 3D visualization of medical image data. A step 901 may comprise retrieving the medical imaging data from a medical imaging data repository, the medical imaging data comprising a plurality of 2D image slices. A step 902 may comprise segmenting anatomical entities in the plurality of 2D image slices using a segmentation model. A step 903 may comprise generating an overlay from a specific 2D image slice of the plurality of 2D image slices and the segmented anatomical entities therein, and displaying the overlay, wherein the segmented anatomical entities are interactable for selecting or deselecting in the overlay. A step 904 may comprise receiving a selection for one or more anatomical entities in the displayed overlay from a user interaction with the displayed segmented anatomical entities. A step 905 may comprise generating the 3D visualization from the plurality of 2D image slices, the 3D visualization visually distinguishing said selected one or more anatomical entities. A step 906 may comprise displaying the 3D visualization.

Many different ways of executing the method are possible, as will be apparent to a person skilled in the art. For example, the order of the steps can be performed in the shown order, but the order of the steps can be varied or some steps may be executed in parallel. Moreover, in between steps other method steps may be inserted. The inserted steps may represent refinements of the method such as described herein, or may be unrelated to the method. For example, some steps may be executed, at least partially, in parallel. Moreover, a given step may not have finished completely before a next step is started. Embodiments of the method may be executed using software, which comprises instructions for causing a processor system to perform method 900. Software may only include those steps taken by a particular sub-entity of the system. The software may be stored in a suitable storage medium, such as a hard disk, a memory, an optical disc, etc. The software may be sent as a signal along a wire, or wireless, or using a data network, e.g., the Internet. The software may be made available for download and/or for remote usage on a server.

It will be appreciated that the presently disclosed subject matter also extends to computer programs, particularly computer programs on or in a carrier, adapted for putting the presently disclosed subject matter into practice. The program may be in the form of source code, object code, a code intermediate source, and object code such as partially compiled form, or in any other form suitable for use in the implementation of an embodiment of the method. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the devices, units and/or parts of at least one of the systems and/or products set forth.

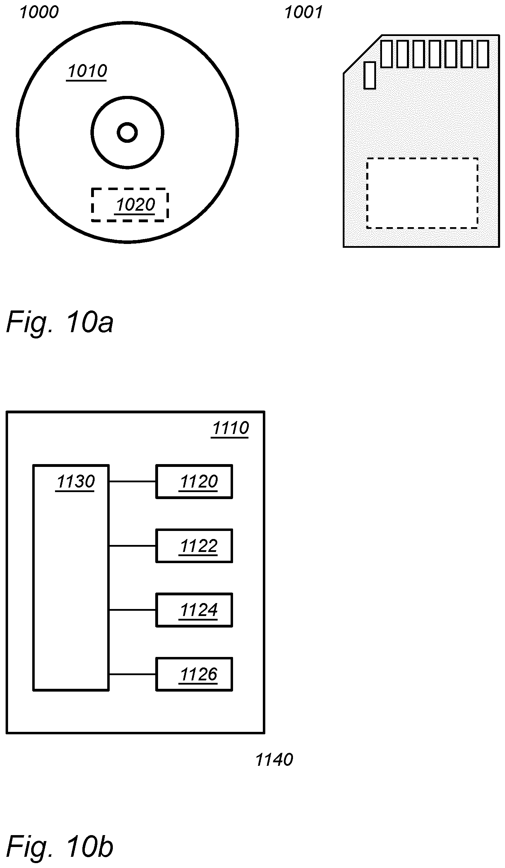

Fig. 10a shows a computer readable medium 1000 having a writable part 1010, and a computer readable medium 1001 also having a writable part. Computer readable medium 1000 is shown in the form of an optically readable medium. Computer readable medium 1001 is shown in the form of an electronic memory, in this case a memory card. Computer readable medium 1000 and 1001 may store data 1020 wherein the data may indicate instructions, which when executed by a processor system, cause a processor system to perform an embodiment of a method, according to an embodiment. The computer program 1020 may be embodied on the computer readable medium 1000 as physical marks or by magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform an embodiment of said method for medical 3D visualization of medical image data.

Fig. 10b shows in a schematic representation of a processor system 1140 according to an embodiment for 3D visualization system. The processor system comprises one or more integrated circuits 1110. The architecture of the one or more integrated circuits 1110 is schematically shown in Fig. 10b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

While system 1140 is shown as including one of each described component, the various components may be duplicated in various embodiments. For example, the processing unit 1120 may include multiple microprocessors that are configured to independently execute the methods described herein or are configured to perform steps or subroutines of the methods described herein such that the multiple processors cooperate to achieve the functionality described herein. Further, where the system 1140 is implemented in a cloud computing system, the various hardware components may belong to separate physical systems. For example, the processing unit 1120 may include a first processor in a first server and a second processor in a second server.

It should be noted that the above-mentioned embodiments illustrate rather than limit the presently disclosed subject matter, and that those skilled in the art will be able to design many alternative embodiments.

In the claims, any reference signs placed between parentheses shall not be construed as limiting the claim. Use of the verb 'comprise' and its conjugations does not exclude the presence of elements or steps other than those stated in a claim. The article 'a' or 'an' preceding an element does not exclude the presence of a plurality of such elements. Expressions such as "at least one of" when preceding a list of elements represent a selection of all or of any subset of elements from the list. For example, the expression, "at least one of A, B, and C" should be understood as including only A, only B, only C, both A and B, both A and C, both B and C, or all of A, B, and C. The presently disclosed subject matter may be implemented by hardware comprising several distinct elements, and by a suitably programmed computer. In the device claim enumerating several parts, several of these parts may be embodied by one and the same item of hardware. The mere fact that certain measures are recited in mutually different dependent claims does not indicate that a combination of these measures cannot be used to advantage.

In the claims references in parentheses refer to reference signs in drawings of exemplifying embodiments or to formulas of embodiments, thus increasing the intelligibility of the claim. These references shall not be construed as limiting the claims.

The computer system further includes a main memory and a static memory, where memories in the computer system communicate with each other and the processor via a bus. Either or both main memory and the static memory may be considered representative examples of the memory of the controller, and store instructions used to implement some, or all aspects of methods and processes described herein. Memories described herein are tangible storage mediums for storing data and executable software instructions and are non-transitory during the time software instructions are stored therein. The main memory and the static memory are articles of manufacture and/or machine components. The main memory and the static memory are computer-readable mediums from which data and executable software instructions can be read by a computer (or e.g., the processor). Each of the main memory and the static memory may be implemented as one or more of random access memory (RAM), read only memory (ROM), flash memory, electrically programmable read only memory (EPROM), electrically erasable programmable read-only memory (EEPROM), registers, a hard disk, a removable disk, tape, compact disk read only memory (CD-ROM (Compact Disk - Read Only Memory)), digital versatile disk (DVD), floppy disk, Blu-ray disk, or any other form of storage medium known in the art. The memories may be volatile or non-volatile, secure and/or encrypted, unsecure and/or unencrypted.

"Memory" is an example of a computer-readable storage medium. Computer memory is any memory which is directly accessible to a processor. Examples of computer memory include RAM memory, registers, and register files. References to "computer memory" or "memory" should be interpreted as possibly being multiple memories. The memory may for instance be multiple memories within the same computer system. The memory may also be multiple memories distributed amongst multiple computer systems or computing devices. The memory may store various software applications including computer executable instructions, that when run on the processor, implement the methods and systems set out herein. Other forms of memory, such as a storage device and a mass storage device, may also be included and accessible by the processor (or processors) via the bus. The storage device and mass storage device can each contain any or all of the methods and systems discussed herein.

The computer system can further include a communications interface by way of which the computer system can connect to networks and receive data useful in executing the methods and system set out herein as well as transmitting information to other devices. The computer system further includes a video display unit as an output device by which information can be output, such as a liquid crystal display (LCD), an organic light emitting diode (OLED), a flat panel display, a solid-state display, or a cathode ray tube (CRT), for example. Additionally, the computer system includes an input device, such as a keyboard/virtual keyboard or touch-sensitive input screen or speech input with speech recognition, and a cursor control device, such as a mouse or touch-sensitive input screen or pad. The computer system also optionally includes a disk drive unit, a signal generation device, such as a speaker or remote control, and/or a network interface device.

The processes and displays presented herein are not inherently related to any particular computer or other apparatus. Various general-purpose systems may also be used with programs in accordance with the teachings herein, or it may prove convenient to construct more specialized apparatus to perform one or more method steps. The structure for a variety of these systems is discussed in the description below. In addition, any programming language that is sufficient for achieving the techniques and implementations of the present disclosure may be used. In addition, the language used in the specification has been principally selected for readability and instructional purposes and may not have been selected to delineate or circumscribe the disclosed subject matter. Accordingly, the present disclosure is intended to be illustrative, and not limiting, of the scope of the concepts discussed herein.

In accordance with various embodiments of the present disclosure, the methods described herein may be implemented using a hardware computer system that executes software programs. Further, in an exemplary, non-limited embodiment, implementations can include distributed processing, component/object distributed processing, and parallel processing. Virtual computer system processing may implement one or more of the methods or functionalities as described herein, and a processor described herein may be used to support a virtual processing environment.

The illustrations of the embodiments described herein are intended to provide a general understanding of the structure of the various embodiments. The illustrations are not intended to fully describe all the elements and features of the disclosure described herein. Many other embodiments may be apparent to those of skill in the art upon reviewing the disclosure. Other embodiments may be utilized and derived from the disclosure, such that structural and logical substitutions and changes may be made without departing from the scope of the disclosure. Additionally, the illustrations are merely representational and may not be drawn to scale. Certain proportions within the illustrations may be exaggerated, while other proportions may be minimized. Accordingly, the disclosure and the figures are to be regarded as illustrative rather than restrictive.

Although specific embodiments have been illustrated and described herein, it should be appreciated that any subsequent arrangement designed to achieve the same or similar purpose may be substituted for the specific embodiments shown. This disclosure is intended to cover all subsequent adaptations or variations of various embodiments. Combinations of the above embodiments, and other embodiments not specifically described herein, will be apparent to those of skill in the art.

The preceding description of the disclosed embodiments is provided to enable any person skilled in the art to practice the concepts described in the present disclosure. As such, the above disclosed subject matter is to be considered illustrative, and not restrictive, and the appended claims are intended to cover all such modifications, enhancements, and other embodiments which fall within the scope of the present disclosure. Thus, to the maximum extent allowed by law, the scope of the present disclosure is to be determined by the broadest permissible interpretation of the following claims and their equivalents and shall not be restricted or limited by the foregoing detailed description.

### Reference signs list

The following list of references and abbreviations is provided for facilitating the interpretation of the drawings in Figs. 1-10b, and shall not be construed as limiting the claims.
- 100: system for medical 3D visualization of medical image data
- 101: processor system
- 102: storage
- 103: communication interface

- 200: system for medical 3D visualization of medical image data
- 201: medical imaging data, comprising a plurality of 2D image slices
- 202: overlay for a specific 2D image slice
- 210: medical imaging data repository
- 220: segmentation model
- 230: overlay generator
- 240: 3D visualizer
- 241: 3D visualization
- 250: user interface
- 260: 3D display
- 261: 2D display

- 300: system for medical 3D visualization of medical image data
- 310: pre-computer of 3D objects for anatomical entities
- 321-323: 3D objects for anatomical entities
- 331-333: visualizations of 3D objects for anatomical entities
- 340: combined 3D visualization

- 400: arrangement for medical 3D visualization of medical image data
- 410: 2D display
- 420: pointing device
- 430: keyboard
- 440: 3D display

- 500: 3D representation of an anatomical entity
- 510: position of specific 2D image slice in 3D model
- 520: position of 2D segment in 3D representation
- 530: anatomical entity

- 600: system for medical 3D visualization of medical image data
- 610: overlay
- 611: cursor
- 612, 613, 614: interactable segments
- 620: displayed 3D visualization

- 700: system for medical 3D visualization of medical image data
- 710: overlay
- 712,713: selected segments
- 720: displayed 3D visualization
- 722, 723: corresponding selected elements in 3D model

- 800: system for orbiting control in medical 3D visualization
- 801, 802: camera
- 810,820: orbit sphere around 3D models
- 830,840: corresponding 3D visualization

- 900: method for medical 3D visualization of medical image data
- 901: retrieving medical imaging data from medical imaging data repository
- 902: segmenting anatomical entities in plurality of 2D image slices
- 903: generating an overlay from a specific 2D image slice and the segmented anatomical entities therein, and displaying the overlay
- 904: receiving a selection for one or more anatomical entities in the displayed overlay from a user interaction
- 905: generating 3D visualization from the plurality of 2D image slices
- 906: displaying 3D visualization

- 1000, 1001: computer-readable medium
- 1010: stored data
- 1020: a computer program
- 1110: processor system
- 1120: processing unit
- 1122: memory
- 1124: dedicated integrated circuit
- 1126: communication element
- 1130: interconnect
- 1140: a processor system

## Claims

1. A computer-implemented method for medical 3D visualization of medical image data, the method comprising
- retrieving the medical imaging data from a medical imaging data repository, the medical imaging data comprising a plurality of 2D image slices;
- segmenting anatomical entities in the plurality of 2D image slices using a segmentation model,
- generating an overlay from a specific 2D image slice of the plurality of 2D image slices and the segmented anatomical entities therein, and displaying the overlay, wherein the segmented anatomical entities are interactable for selecting or deselecting in the overlay,
- receiving a selection for one or more anatomical entities in the displayed overlay from a user interaction with the displayed segmented anatomical entities;
- generating the 3D visualization from the plurality of 2D image slices, the 3D visualization visually distinguishing said selected one or more anatomical entities,
- displaying the 3D visualization.

2. A method as in claim 1,
- wherein the user interaction for receiving the selection comprises receiving a user input signal within the displayed overlay from a pointing device, such as a mouse, a cursor, or a pointer, and/or
- wherein the user interaction for receiving the selection comprises receiving a user eye-tracking signal within the displayed overlay obtained from a camera.

3. A method as in any one of the preceding claims, wherein the segmented anatomical entities are visually distinguished in said overlay by one or more of the following: a color-coding, a texture mapping, an opacity, outline or border style, brightness or contrast, a highlighting.

4. A method as in any one of the preceding claims, wherein the selected anatomical entities in the 3D visualization are visually distinguished by
- including a selected anatomical entity and/or excluding a deselected anatomical entity in the 3D visualization, or
- one or more of the following: a color-coding, a texture mapping, an opacity, outline or border style, brightness or contrast, saturating and/or desaturating, and a highlighting.

5. A method as in any one of the preceding claims, comprising
- pre-computing 3D objects for anatomical entities in the plurality of 2D image slices, wherein generating the 3D visualization comprises including in the 3D visualization the pre-computed 3D objects corresponding to the selected anatomical entities and/or visually distinguishing said 3D objects.

6. A method as in any one of the preceding claims, comprising
- generating a pre-selection from the segmented anatomical entities in the plurality of 2D image slices, and enabling a user interaction to amend the pre-selection thus obtaining the selection.

7. A method as in claim 6, comprising
- identifying anatomical anomalies in the anatomical entities, including lesions, anomalous arterial branches, tumors, bone abnormalities, and wherein the pre-selection includes said identified anatomical anomalies.

8. A method as in any one of the preceding claims, wherein the selected one or more anatomical entities in the displayed 3D visualization are interactable, the method further comprising \
- receiving a selection for one or more anatomical entities in the displayed 3D visualization, and correspondingly amending the selection of anatomical entities obtained from the user interaction
- displaying the amended selection in the 3D visualization and/or the 2D overlay. \

9. A method as in any one of the preceding claims, wherein generating the 3D visualization comprises selecting a camera position, including a camera location and/or camera direction, with respect to a 3D model of the one or more anatomical entities, the method further comprising
- adjusting the camera position for the 3D visualization in response to a user input, allowing viewing around the selected anatomical entities, and/or
- replacing the specific 2D image slice of the plurality of 2D image slices in the overlay with another 2D image slice of the plurality of 2D image slices, in response to user input.

10. A method as in any one of the preceding claims, wherein the 3D visualization is displayed on a separate projection device, such as a holographic display and/or an augmented-reality (AR) headset.

11. A method as in any one of the preceding claims, wherein generating the 3D visualization comprises defining a 3D camera with respect to the selected anatomical entities, the method comprising
- moving the 3D camera in response to an amendment of the selection obtained from the user interaction to center the selected anatomical entities in 3D.

12. A method as in any one of the preceding claims, wherein a position of the specific 2D image slice in the plurality of 2D image slices is visible on the 3D visualization.

13. A method as in any one of the preceding claims, wherein the 3D visualization includes the selected anatomical entities with reduced opacity, displaying the 3D visualization comprises an animation orbiting around the selected anatomical entities.

14. A system comprising: one or more processors; and one or more storage devices storing instructions that, when executed by the one or more processors, cause the one or more processors to perform operations for a method as in any one of the preceding claims 1-13.

15. A transitory or non-transitory computer-readable medium comprising data representing instructions, which when executed by a processor system, cause the processor system to perform one or more steps of the method as in any one of claims 1-13.
